# EUROPEAN PATENT APPLICATION

(11) **EP 2 061 267 A1**
(43) Date of publication of application: **20.05.2009**
(21) Application number: 07805996.1
(22) Date of filing: 23.08.2007
(51) Int. Cl.: H04Q 7/22, H04L 12/56, H04Q 7/36, H04Q 7/38

(54) **DATA RETRANSMITTING METHOD, NETWORK CONTROL DEVICE, MOBILE STATION AND BASE STATION**

(30) Priority: 06.09.2006 JP 2006241827
(71) Applicant: Mitsubishi Electric Corporation, Chiyoda-ku Tokyo 100-8310 (JP)
(72) Inventor: MAEDA, Masaya, Tokyo 100-8310 (JP)
(74) Representative: Pfenning, Meinig & Partner GbR
(86) International application number: PCT/JP2007/066367
(87) International publication number: WO 2008/029628

(57) **Abstract**

A data retransmission method according to the present invention includes, in a radio communication system, a packet transmission step at which an RNC 4 creates a packet in a desired size from a data packet and transmits the packet to a BTS 2 to which a UE 1 as a destination of the packet belongs, a reception result notification step at which the BTS 2 transmits a received packet to the UE 1 and notifies the RNC 4 of a packet reception result obtained from the UE 1, a data packet transmission result determination step at which the RNC 4 determine whether a data packet corresponding to a packet transmitted to the BTS 2 has correctly reached the UE 1 based on a reception result, and a data retransmission step at which, upon execution of handover by the UE, the RNC 4 retransmits a data packet, which is determined that it has not correctly reached the UE 1, via a BTS 3 that is a handover destination.

## Description

### TECHNICAL FIELD

The present invention relates to a radio communication technology. More particularly, the present invention relates to a data retransmission method, which is employed in a radio communication system having a retransmission control function and constituted of a base station and a mobile station, in which a piece of data that might not have reached a destination mobile station due to handover is retransmitted to the destination mobile station, a network controller for realizing the data retransmission method, a mobile station, and a base station.

### BACKGROUND ART

Conventionally, HSDPA (High Speed Downlink Packet Access) and HSUPA (High Speed Uplink Packet Access) have been standardized as schemes that realize high-speed packet transmission in a UMTS (Universal Mobile Telecommunication Services) system.

The core technology that realize high-speed packet transmission using the above schemes include high-speed packet transmission/reception scheduling at a radio base station closest to a radio channel (BTS: Base Transceiver Station), radio channel error control between the BTS and a mobile terminal (UE: User Equipment) by using an HARQ (Hybrid Automatic Repeat Request) scheme, highly-reliable data transmission using a double ARQ loop of the HARQ and a conventional ARQ (Automatic Repeat Request) in an RLC (Radio Link Control) layer of a radio network controller (RNC: Radio Network Controller), and adaptive modulation for adaptively changing a modulation scheme and error correction capability in a radio channel between the BTS and the UE depending on the quality of the radio channel. Particularly, a transmission scheme in which an HARQ scheme in MAC (Medium Access Control) layers of the BTS and the UE is combined with an ARQ scheme in the RLC layer is also employed in EUTRA (Evolved Universal Terrestrial Radio Access) and EUTRAN (Evolved Universal Terrestrial Radio Access Network), which are next generation access scheme and a radio access network for the UMTS, as a core technology for realizing fast and reliable packet transmission (see below Non Patent Literature 1).

Packet retransmission and packet loss cause throughput degradation in high-speed data transmission applications or quality degradation in real time applications such as a VoIP (Voice Over IP). Furthermore, if TCP is used as a transport, congestion control is performed, resulting in causing throughput degradation at an IP packet level. This leads to a problem that some time is required to recover from the throughput degradation. The packet retransmission and the packet loss occur mainly due to quality degradation of a radio channel. However, handover due to movement of a user cannot be ignored.

A technology for resolving problems with the packet retransmission and the packet loss that occur at the time of execution of the handover is disclosed in Patent Document 1. In the technology disclosed in the Patent Document 1, in a UMTS system including an HSDPA, when execution handover, a handover source BTS transmits to an RNC a sequence number (BVT(A)) of data of which acknowledge (ACK: Acknowledge) is to be received next by HARQ, and the RNC transfers data having a sequence number subsequent to the BVT(A) to a handover destination BTS or an RNC that controls the handover destination BTS. With this technology, in a situation that an RLC layer of the RNC is in a mode for checking acknowledgement by ARQ (AM: Acknowledge Mode) and a MAC layer of the BTS is in a transmission mode for performing HARQ, all pieces of data that may be lost due to handover are retransmitted from a handover destination BTS. Therefore, even when data transmission is being checked by HARQ or ARQ, data transmission can be interrupted and handover can be performed promptly.

Patent Document 1: Patent Application Publication No. 2005-510950
Non Patent Literature 1: 3GPP TR25.912, "Feasibility Study for Evolved Universal Terrestrial Radio Access (UTRA) and Universal Terrestrial Radio Access Network (UTRAN)", Ver. 7.0.0 (2006-06-23)

### DISCLOSURE OF INVENTION

### PROBLEM TO BE SOLVED BY THE INVENTION

However, in the above described conventional technology (conventional data retransmission scheme), all the pieces of data subsequent to last data before which ACK was continuously received are assumed as data for which NACK is received, and those pieces of data are retransmitted via a handover destination base station. Therefore, even when ACK has been received for data (data of which transmission is completed), if that data is subsequent to either data for which NACK has been received or data for which neither ACK nor NACK has been received, that data also becomes the target for retransmission resulting into ineffective retransmission. Particularly, under a condition (RLC AM) employed by the conventional retransmission scheme, retransmission control is performed by using a Selective Repeat ARQ scheme in which a plurality of pieces of data in a transmission window is transmitted in bulk without checking acknowledge of previous pieces of data. Therefore, with the conventional data retransmission scheme, in a situation where ACK was not received for only a piece of data of an earlier sequence number in the transmission window but ACK was received for almost all pieces of the data transmitted after that data in the transmission window, although ACK has been received for almost all the pieces of the data in the transmission window, almost all the pieces of the data are discarded and then retransmitted.

Furthermore, the above Patent Document 1 does not discloses a technology related to data retransmission performed when an RLC is in an unacknowledged mode (UM: Unacknowledged Mode) that is suitable for data transmission of an application having real time capability such as a VoIP and the HARQ are used in combination with the UM. However, under the "RLC UM", the RLC layer assumes that all the pieces of data reaches a reception side at the same time of data transmission. Therefore, if handover is executed while data is being retransmitted by HARQ in the MAC layer, data loss occurs.

The present invention has been made to solve the above problems in the conventional technology and it is an object of the present invention to provide a data retransmission method, which is capable of preventing occurrence of ineffective packet retransmission at the time of handover and realizing fast and effective handover in a high-speed radio packet access system that performs retransmission control by HARQ and the like in the MAC layer when the AM or the UM is activated in the RLC layer, a network controller that realizes the data retransmission method, a base station, and a mobile station.

Furthermore, in the UMTS Release 6, a technology for providing a high-speed radio packet access by performing data retransmission by HARQ and the like in the MAC layer covers uplink data that is transmitted from a UE to a BTS as well as downlink data that is transmitted from the BTS to the UE. In the UE, an RLC layer and a MAC layer are provided in a single device, which is different from a configuration of a radio access network (RAN) in which the RLC layer is provided in an RNC and the MAC layer is provided in a BTS. A data retransmission technology and a radio communication system at the time of handover with the above device configuration are not disclosed. Therefore, another object of the present invention is to provide a data retransmission method that realizes fast and effective handover for high-speed uplink data communication.

### MEANS FOR SOLVING PROBLEM

To solve the above-mentioned problems, and to achieve the above-mentioned object, there is provided a data retransmission method implemented in a radio communication system including a base station and a network controller that transmits a data packet received from a network to a destination mobile station via the base station, wherein the network controller retransmits a data packet received from the network to a destination mobile station of the data packet depending on needs. The data retransmission method includes a packet transmission step including the network controller creating a single packet or a plurality of packets in a desired size from the data packet, and the network controller transmitting created packet to a base station that controls a destination mobile station; a reception result notification step including the base station transmitting a received packet to a destination mobile station and notifying the network controller of a packet reception result obtained from the destination mobile station; a data packet transmission result determination step including the network controller determining, based on a notified reception result, whether a data packet corresponding to a packet transmitted to the base station has correctly reached a destination mobile station; and a data retransmission step including, upon execution of handover by the destination mobile station, the network controller retransmitting a data packet, the data packet being determined that it has not correctly reached the destination mobile station, via a based station being a handover destination.

### EFFECT OF THE INVENTION

According to an aspect of the present invention, a radio network controller (RNC) included in a radio communication system stores data in units of data packet (upper layer packet) received from an upper layer, acquires acknowledge data by HARQ from a base station (BTS) with respect to each packet that is created based on a stored upper layer packet and in a desired size, and identifies the upper layer packet that could not reach a destination mobile station (UE) based on the acquired acknowledge data. Then, the RNC retransmits the upper layer packet that could not reach the UE to a handover destination BTS. Therefore, even when data is being transmitted, handover can be executed in a prompt manner.

Furthermore, the upper layer packet is retransmitted to the handover destination BTS only when there is a packet of a desired size of which acknowledge by HARQ is not received by the handover source BTS. Therefore, amount of data to be retransmitted from the RNC to the UE can be reduced, reducing throughput degradation caused by data retransmission.

### BRIEF DESCRIPTION OF DRAWINGS

[Fig. 1] Fig. 1 is a diagram of an example of a protocol architecture for realizing a data retransmission method according to the present invention.
[Fig. 2] Fig. 2 is a diagram of an example of a protocol stack for realizing the data retransmission method according to the present invention.
[Fig. 3] Fig. 3 is a diagram of a configuration example of a radio communication system for realizing the data retransmission method according to the present invention.
[Fig. 4] Fig. 4 is a diagram of a configuration example of a radio communication system for realizing the data retransmission method according to the present invention.
[Fig. 5] Fig. 5 is a flowchart of an example of downlink data retransmission processing performed by an RNC according to a first embodiment.
[Fig. 6-1] Fig. 6-1 is a diagram of an example of a structure of an FP data frame containing a dummy acknowledge flag.
[Fig. 6-2] Fig. 6-2 is a diagram of an example of a structure of an FP data frame containing a dummy acknowledge flag.
[Fig. 7] Fig. 7 is a diagram of a configuration example of an RLC SDU retransmission buffer.
[Fig. 8] Fig. 8 is a diagram of an example of a dummy acknowledge operation performed by a BTS according to the first embodiment.
[Fig. 9] Fig. 9 is a diagram of a configuration example of a dummy acknowledge necessity determination table.
[Fig. 10] Fig. 10 is a diagram of a configuration example of an FP data frame containing MAC PDU-ID.
[Fig. 11] Fig. 11 is a flowchart of an operation performed by a BTS upon receiving an HARQ response signal (ACK) from a UE.
[Fig. 12] Fig. 12 is a diagram of an example of contents of dummy acknowledge data.
[Fig. 13] Fig. 13 is a flowchart of an exemplary operation performed by a UE according to a second embodiment.
[Fig. 14] Fig. 14 is a schematic diagram for explaining data exchange among an RLC layer, a MAC layer, and a MAC-hs layer in a UE according to the second embodiment.
[Fig. 15] Fig. 15 is a diagram of an example of contents of an RLC PDU-ID reference table.
[Fig. 16] Fig. 16 is a flowchart of an operation performed by an UE upon receiving an HARQ response signal (ACK) from a BTS.
[Fig. 17] Fig. 17 is a diagram of a configuration example of a radio communication system for realizing a data retransmission method according to a third embodiment.
[Fig. 18] Fig. 18 is a schematic diagram for explaining data exchange between an RLC layer and a MAC-hs layer in an ENB according to the third embodiment.
[Fig. 19] Fig. 19 is a flowchart of downlink data retransmission processing performed by the ENB according to the third embodiment.

### EXPLANATIONS OF LETTERS OR NUMERALS

- 1, 1a: User Equipment (UE)
- 2, 3: Base Transceiver Station (BTS)
- 4, 5: Radio Network Controller (RNC)
- 6, 7: E-UTRAN NodeB (ENB)
- 8: Access Gateway (AGW)
- 11, 22, 32, 41: RLC unit
- 12, 42: MAC unit
- 13, 13a, 21, 21a, 31, 31a: MAC-hs unit
- 61, 62, 63: dummy acknowledge flag (F)

### BEST MODE(S) FOR CARRYING OUT THE INVENTION

Exemplary embodiments of a data retransmission method, a network controller, a base station, and a mobile station according to the present invention are explained in detail below with reference to the accompanying drawings. The present invention is not limited to the following embodiments.

### First Embodiment.

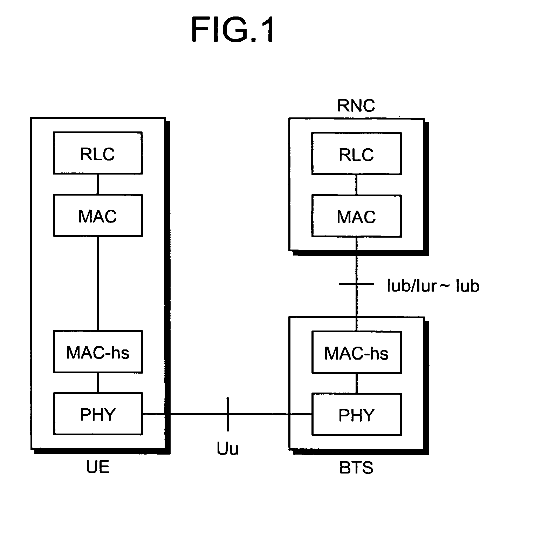

Fig. 1 is a diagram of an example of a protocol architecture for realizing a data retransmission method according to the present invention. As shown in Fig. 1, according to the present embodiment, an RLC layer and a MAC layer that perform transmission processing on downlink data are provided in an RNC, and a MAC-hs layer is provided in a BTS. Furthermore, all of an RLC layer, a MAC layer, and a MAC-hs layer are provided in a UE to perform data reception processing. The RNC and the BTS are connected to each other via an Iub interface. Moreover, MAC data in the RNC (hereinafter, referred to as "MAC_PDU") is transferred to the BTS by using an encapsulation method called FP (Frame Protocol). Although not shown in the drawings, the BTS is not limited to a BTS controlled by an SRNC (Serving RNC) that is an RNC that performs call processing on a UE. In other words, the BTS can be a BTS controlled by a DRNC (Drift RNC) that is an RNC different from the SRNC. When the BTS is the BTS controlled by the DRNC, subscriber extension is carried out between the SRNC and the DRNC by an Iur interface, and MAC data in the SRNC is transferred to the BTS by FP. The operation according to the embodiment is the same even in a subscriber extension state. Therefore, only an example in which subscriber extension has not been carried out yet is described below. Data that has been subjected to an HARQ process in the MAC-hs layer in the BTS is radio transmitted from a physical (PHY) layer to the UE.

The protocol architecture described above is defined for descriptive purpose to simplify explanation of the present embodiment. In other words, the scope of application of the present invention is not to be limited to this protocol architecture.

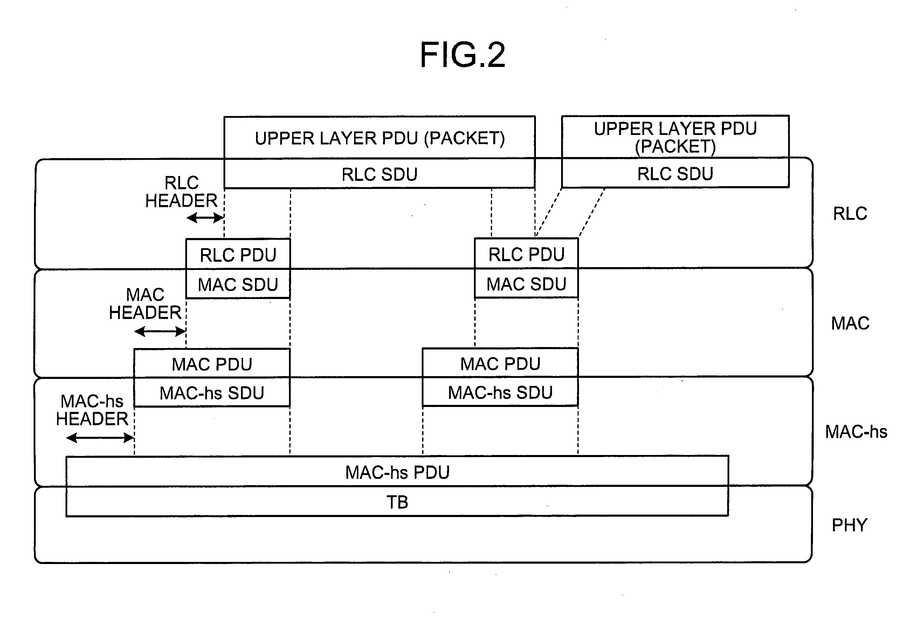

Fig. 2 is a diagram of an example of a protocol stack for realizing the data retransmission method according to the present embodiment. A downlink data packet is input to the RLC layer of the RNC. The downlink data packet in the RLC layer is referred to as "RLC SDU" (RLC Service Data Unit, hereinafter, referred to as "RLC_SDU").

The RLC_SDU is divided or combined so that it is of a size defined by the MAC layer, and then a header is added to that RLC_SDU. The header contains a sequence number to be used when retransmission control is performed in the RLC layer or when the RLC_SDU is reconfigured in an RLC layer of a reception side. When an "RLC PDU" (RLC Protocol Data Unit, hereinafter, referred to as "RLC_PDU") created by dividing or combining the RLC_SDU contains a plurality of RLC_SDUs or a fragment of RLC_SDU, Length Indicator is added to a header of that RLC_PDU to enable identification of an RLC_SDU boundary in the RLC_PDU. The RLC_PDU is output to the MAC layer as output data of the RLC layer. The RLC_PDU that received by the MAC layer as input data is referred to as "MAC SDU" (hereinafter, referred to as "MAC_SDU") in the MAC layer. The MAC layer adds header information to the MAC_SDU and outputs the MAC_SDU as "MAC PDU" (hereinafter, referred to as "MAC_PDU"). Subsequently, a plurality of the MAC_PDUs are bundled as an FP data frame, and the FP data frame is transferred to a transmission destination BTS.

The BTS retrieves the MAC_PDUs from the FP data frame and inputs the MAC_PDUs to the MAC-hs layer. The input data (MAC_PDU) input into the MAC-hs layer is referred to as "MAC-hs SDU" (hereinafter, referred to as "MAC-hs_SDU"). In the MAC-hs layer, a plurality of the MAC-hs_SDUs are multiplexed, and a header containing information to be used for splitting each piece of the MAC-hs_SDU in a MAC-hs layer of a reception side (UE) is added to that MAC-hs_SDU. The header also contains information necessary for performing retransmission by using an HARQ scheme in the MAC-hs layer. Multiplexed data with the header added is referred to as "MAC-hs PDU" (hereinafter, referred to as "MAC-hs_PDU") and it is output to a PHY layer. In the PHY layer, the MAC-hs_PDU is referred to as a transport block (TB: Transport Block). The TB is subjected to error correction encoding processing and spreading modulation processing, and then radio transmitted to the UE.

The UE performs an HARQ process on the received MAC-hs_PDU in the MAC-hs layer, and transmits a response signal indicating a result of the HARQ process to the BTS. That is, transmits an ACK as the response signal when received data is normal, and transmits a NACK when the received data is abnormal. The response signal is notified to the BTS as a control signal (not shown) unique to the PHY layer. When the MAC-hs layer of the BTS determines based on the control signal received from the UE that the MAC-hs_PDU has not reached the UE (when the response signal is NACK), it retransmits the unreached MAC-hs_PDU. Upon correctly receiving the MAC-hs_PDU, the MAC-hs layer of the UE retrieves MAC_SDU from the MAC-hs_PDU, and sends the retrieved MAC_SDU to the RLC layer via the MAC layer. The RLC layer recovers the RLC_SDU from the MAC_SDU, that is, the RLC_PDU, and transmits the RLC_SDU to an upper layer.

When the AM is in an activated state in each of the RLC layers of the RNC and the UE, the RLC_PDU is subjected to retransmission control using Selective Repeat ARQ scheme. That is, the RLC layer of the UE transmits a reception status of the RLC_PDU as status information to the RLC layer of the RNC based on a status information transmission trigger specified by the RNC. If the RLC layer of the RNC that received the status information determines that the RLC_PDU has not reached the UE, the RLC layer of the RNC retransmits the unreached RLC_PDU. The status information reaches the RLC layer of the RNC via a route defined by another protocol stack and another protocol architecture, which are not shown.

The protocol stack mentioned above is defined for descriptive purpose to simplify explanation of the present embodiment, and the scope of application of the present invention is not to be limited to this protocol stack.

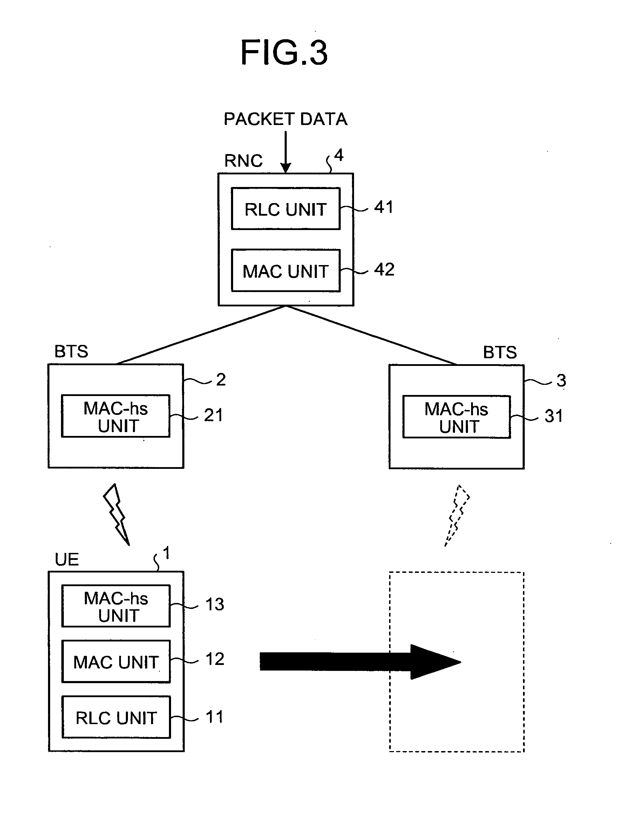

A data retransmission operation at the time of handover when the data retransmission method according to the present invention is applied is described in detail below with reference to Fig. 3. Fig. 3 is a diagram of a configuration example of a radio communication system for realizing the data retransmission method according to the present invention.

In the example shown in Fig. 3, a UE 1 includes an RLC unit 11 that performs processing corresponding to an RLC layer, a MAC unit 12 that performs processing corresponding to a MAC layer, and a MAC-hs unit 13 that performs processing corresponding to a MAC-hs layer. The UE 1 communicates with a BTS 2 when it is in a cell controlled by the BTS 2.

The BTS 2 includes a MAC-hs unit 21 that performs processing corresponding to a MAC-hs layer. The MAC-hs unit 21 of the BTS 2 performs user multiplexing, HARQ, and the like on MAC-d PDU received from an RNC 4, and distributes the processed MAC_PDU to the UE 1.

The RNC 4 includes an RLC unit 41 that performs processing corresponding to an RLC layer, and a MAC unit 42 that performs processing corresponding to a MAC layer. The RNC 4 is an SRNC that performs call control on the UE 1 and radio resource control on the BTS 2.

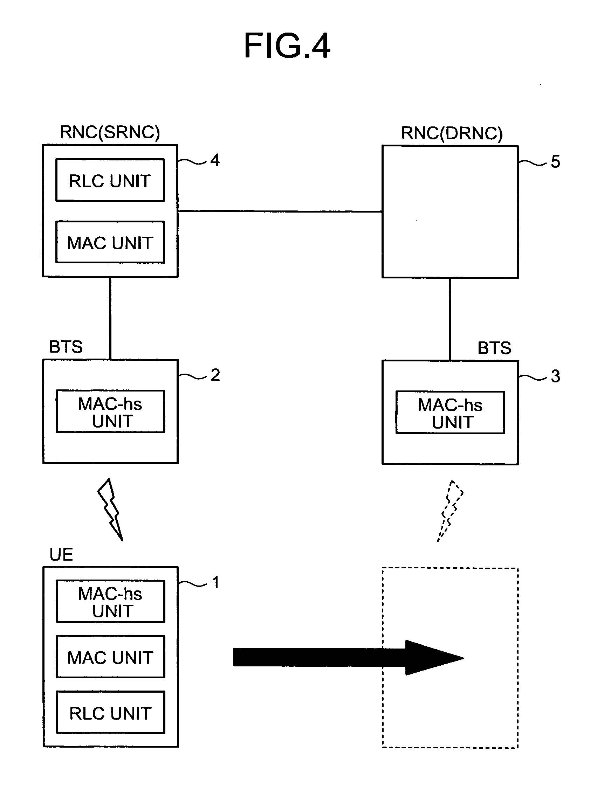

Downlink packet data to the UE 1 is transmitted from a higher-level device (not shown) of the RNC 4. The RNC 4 determines whether to handover the UE 1 to a cell controlled by a BTS 3 based on measurement data (data about downlink line quality) received from the UE 1. The handover herein means mobile control including processing of causing HS-PDSCH (High Speed Physical Data Shared CHannel) for performing high-speed transmission in an HSDPA communication to belong to a cell controlled by the BTS 3 from a cell controlled by the BTS 2. Furthermore, the handover herein includes, in addition to normal handover, mobile control called Cell Change for switching the HS-PDSCH while connections between a DCH (Dedicated CHannel), which is a dedicated channel for transmitting and receiving a control signal or other data in the HSDPA, and both of the BTS 2 and the BTS 3 are being established. Although a configuration as shown in Fig. 3 is exemplary described for simplifying explanation, the BTS 2 and the BTS 3 shown in Fig. 3 can be configured in other ways instead of the configuration in which they are controlled by the RNC 4 that is an SRNC. For example, as shown in Fig. 4, the BTS 3, which is a handover destination, can be controlled by an RNC 5, which is a DRNC, instead of the RNC 4.

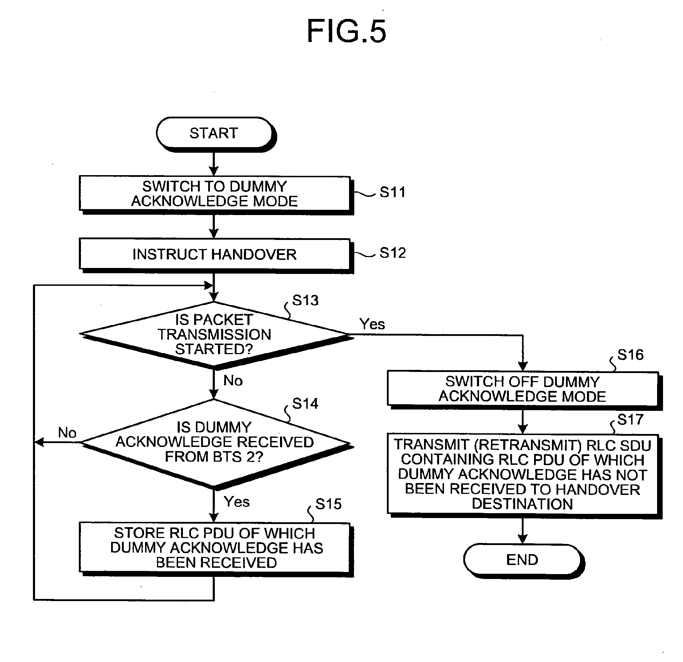

An operation of the RNC 4 is described below with reference to Fig. 3 and Fig. 5. Fig. 5 is a flowchart of an example of a downlink data (downlink data packet) retransmission processing by the RNC 4. Upon determining to handover the UE 1 from a cell controlled by the BTS 2 to a cell controlled by the BTS 3, the RNC 4 enters a dummy acknowledge mode (Step S11). That is, the RLC unit 41 and the MAC unit 42 are switched to the dummy acknowledge mode.

While in the dummy acknowledge mode, the RLC unit 41 stores subsequent RLC_SDUs in a retransmission buffer so that the subsequent RLC_SDUs can be transmitted to the BTS 3 after completion of the handover. The retransmission buffer can be arranged in the RLC unit 41 or outside of the RLC unit 41. When the RLC operates in the AM (a mode in which acknowledge is checked by ARQ), a data retransmission buffer used for an ARQ process can be used as the retransmission buffer for storing therein the RLC_SDU so that there is no need to provide an additional retransmission buffer for the RLC_SDU. When the MAC unit 42, which is also in the dummy acknowledge mode, creates an FP data frame by bundling a plurality of MAC_PDUs, sets a dummy acknowledge notification flag in the FP data frame, and transmits the FP data frame to the BTS 2. The dummy acknowledge flag is used by the RNC 4 to instruct the BTS 2 to transmit a dummy acknowledge for MAC_PDU that has been transmitted, which will be described later.

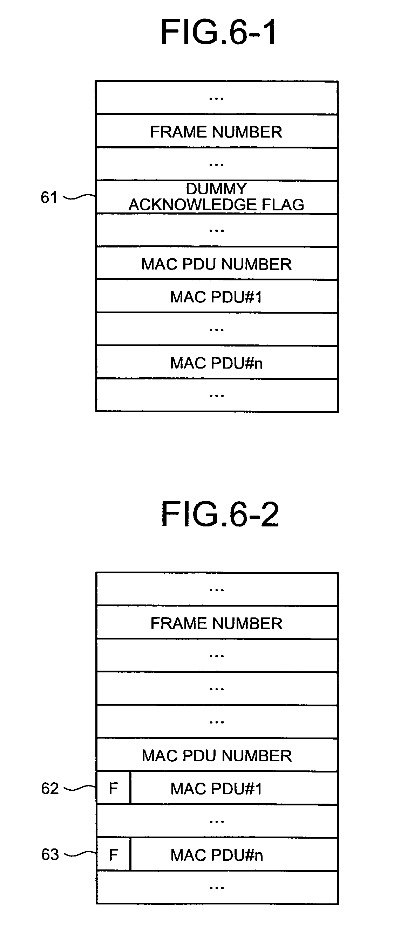

The dummy acknowledge notification flag can have, for example, a frame format shown in Fig. 6-1 in which a single acknowledge flag 61 is added for requesting dummy acknowledges for all MAC_PDUs contained in the FP data frame. Alternatively, as shown in Fig. 6-2, a dummy acknowledge flag (F62, F63, ...) can be added to each piece of the MAC_PDU. In the following explanation, the frame format shown in Fig. 6-1 is employed for simplification of the explanation. However, other frame formats can be employed. For example, by using a format shown in Fig. 6-2 or the like, control can be performed to cause MAC_PDU, which contains RLC_PDU containing an RLC_SDU boundary that is data at the tail of the RLC_SDU, to request a dummy acknowledge, or control can be performed not to request a dummy acknowledge when MAC_PDU contains only RLC control information instead of data. These techniques make it possible to minimize a bandwidth necessary for transmitting the dummy acknowledge from the BTS 2 to the RNC 4.

In the dummy acknowledge mode, the RNC 4 instructs the BTS 2, which is the handover source; the BTS 3, which is the handover destination; and the UE 1 to start handover. With this, the handover processing begins (Step S12). The RNC 4 waits for a dummy acknowledge from the BTS 2 until a data transmission destination is switched from the BTS 2 to the BTS 3. Specifically, the RNC 4 monitors whether the transmission destination has been changed and packet transmission has been started (whether the transmission destination has been switched) (Step S13). If the transmission destination has not been switched completely (No at Step S13), the RNC 4 monitors whether a dummy acknowledge is received from the BTS 2 (Step S14). This monitoring of the dummy acknowledge is performed by the MAC unit 42. If no dummy acknowledge is received from the BTS 2 (No at Step S14), process control returns to Step S13. On the other hand, if the dummy acknowledge is received from the BTS 2 (Yes at Step S14), information indicating that the RLC_PDU contained in the MAC_PDU corresponding to the received dummy acknowledge (MAC_PDU with the dummy acknowledge) has reached the UE 1 is stored (Step S15).

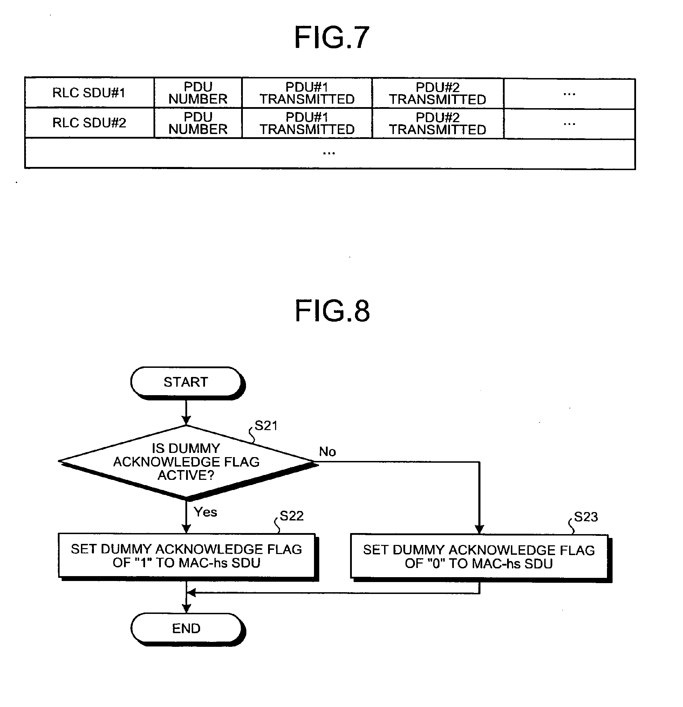

Subsequently, processing at the above-mentioned Steps S13, S14, and S15 are repeatedly performed, and when dummy acknowledges for all RLC_PDUs contained in the RLC_SDU are confirmed (when dummy acknowledges for all RLC_PDUs contained in the RLC_SDU are received), the RLC_SDU is deleted from the retransmission buffer. For example, if the RLC_SDU retransmission buffer is configured as shown in Fig. 7, a flag is set in a field corresponding to the RLC_SDU of which transmission to the UE 1 is tentatively confirmed by the dummy acknowledge, and when flags are set in all acknowledge fields, all pieces of data in a target entry containing the RLC_SDU are cleared. A timing of switching the data transmission destination from the BTS 2 to the BTS 3 basically depends on a handover scheme. For example, the timing can be a time point when the RNC 4 receives a completion notice from the UE 1 after the UE 1 completes handover to a cell controlled by the BTS 3, or it can be a time point later than a handover execution timing that is notified by the RNC 4 to the UE 1, the BTS 2, and the BTS 3.

Furthermore, at the above-mentioned Step S13, when it is determined that the packet transmission destination is switched (Yes at Step S13), the RNC 4 exits the dummy acknowledge mode (Step S16), and transmits the RLC_SDU remained in the retransmission buffer to the BTS 3 that is a handover destination (Step S17). An operation of each unit in the RNC 4 for transferring the RLC_SDU is the same as a normal operation of transmitting downlink data.

An operation of the BTS 2 is described below with reference to Fig. 3 and Fig. 8. Upon receiving the FP data frame from the RNC 4, the MAC-hs unit 21 of the BTS 2 checks the dummy acknowledge flag in the received FP data frame and determines whether a dummy acknowledge is necessary for each piece of the MAC-hs_SDU (MAC_PDU) contained in the FP data frame (Step S21).

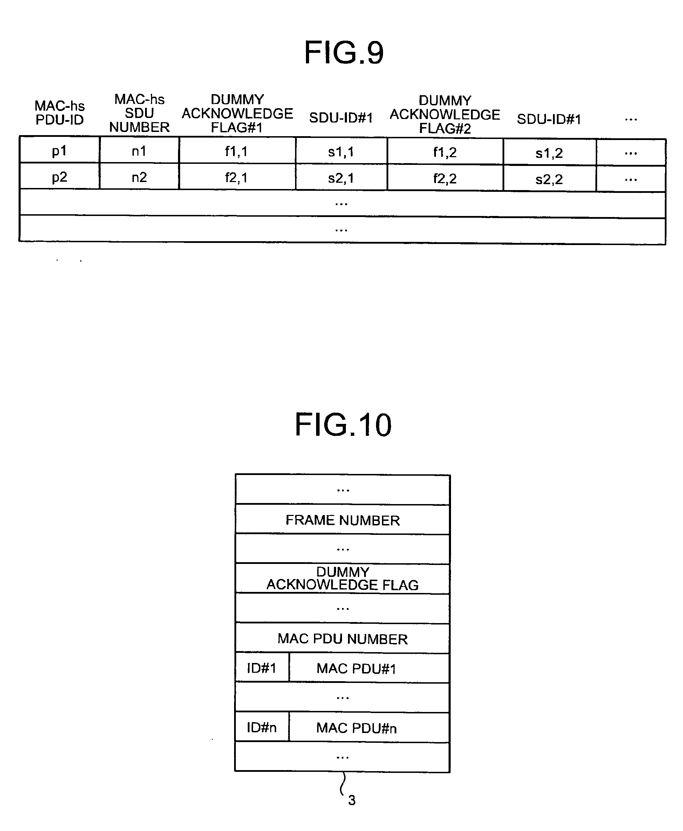

When the dummy acknowledge is necessary (Yes at Step S21), the MAC-hs unit 21 stores the MAC-hs_SDU and information indicating that the dummy acknowledge is necessary (for example, the dummy acknowledge flag corresponding to the MAC-hs_SDU is set to "1") (Step S22). On the other hand, when the dummy acknowledge is not necessary (No at Step S21), the MAC-hs unit 21 stores the MAC-hs_SDU and information indicating that the dummy acknowledge is not necessary (for example, the dummy acknowledge flag corresponding to the MAC-hs_SDU is set to "0") (Step S23). Then, a scheduling block in the MAC-hs unit 21 multiplexes the MAC-hs_SDUs to create MAC-hs_PDU based on scheduling information. When doing this, the scheduling block creates a dummy acknowledge necessity determination table as shown in Fig. 9 in which an ACK reception notice from an HARQ processing block that performs HARQ process is associated with corresponding MAC-hs_SDU in the MAC-hs unit 21.

In the example shown in Fig. 9, MAC-hs_PDU-ID is an identification (ID) for associating an ACK reception notice from the HARQ processing block with corresponding MAC-hs_PDU, and MAC-hs_SDU number is the number of MAC-hs_SDU contained in the MAC-hs_PDU, both of which are data obtained when creating the MAC-hs_PDU in the scheduling block. Dummy acknowledge flag is information indicating whether a dummy acknowledge needs to be transmitted to the RNC 4 for each piece of MAC-hs_SDU multiplexed in the MAC-hs_PDU. SDU-ID is an ID for identifying MAC-hs_SDU in a MAC-hs layer. Based on the SDU-ID, that is, an ID assigned to the MAC_PDU, a sequence number of corresponding MAC_SDU (RLC_PDU) can be identified. The SDU-ID can be assigned by, for example, the MAC unit 42 of the RNC 4 and its information can be contained in the header of the MAC_PDU. However, according to the present embodiment, a scheme in which the MAC_PDU-ID (ID_1, ..., ID_n) is transmitted as an FP data frame as shown in Fig. 10 is employed for simplifying explanation.

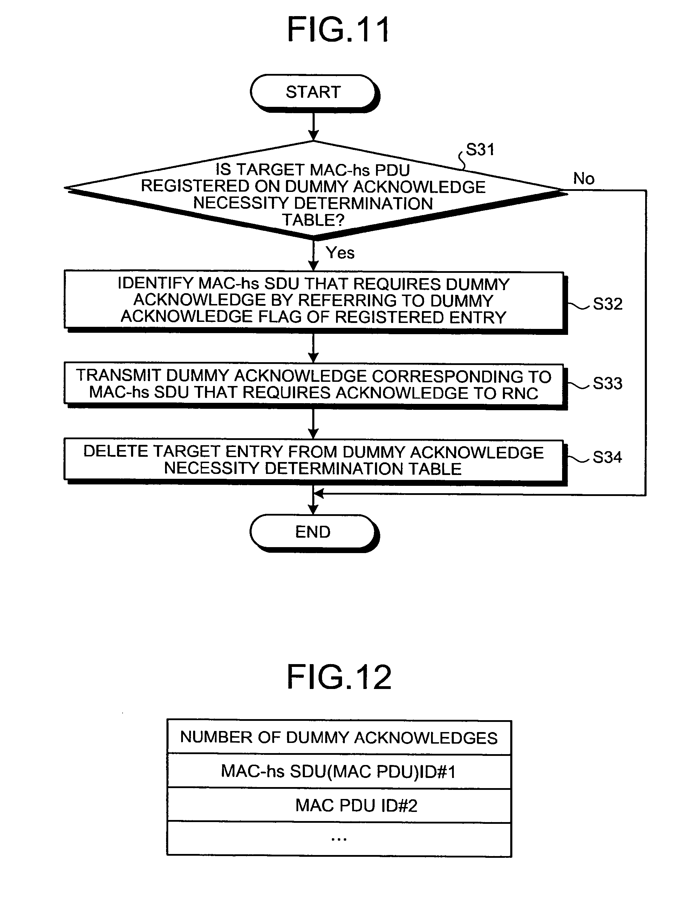

Meanwhile, upon receiving HARQ response signal (ACK) from the UE 1, the MAC-hs unit 21 of the BTS 2 performs the processing shown in Fig. 11. Specifically, in the MAC-hs unit 21 of the BTS 2, the HARQ processing block identifies transmission MAC-hs_PDU corresponding to the received ACK based on the timing of receiving the ACK, and refers to the dummy acknowledge necessity determination table shown in Fig. 9 (Step S31). The process control ends when an ID of the identified MAC-hs_PDU (MAC-hs_PDU-ID) is not registered in the dummy acknowledge necessity determination table (No at step S31). On the other hand, when the ID of the above identified MAC-hs_PDU is registered in the dummy acknowledge necessity determination table (Yes at step S31), the MAC-hs unit 21 refers to the dummy acknowledge flag in a registered entry (the dummy acknowledge flag corresponding to the ID of the identified MAC-hs_PDU), and identifies MAC-hs_SDU that requires transmission of a dummy acknowledge to the RNC 4 from among the MAC-hs_SDUs contained in the MAC-hs_PDU (Step S32). Then, the MAC-hs unit 21 transmits the dummy acknowledge of the identified MAC-hs_SDU to the RNC 4 (Step S33). Incidentally, as shown in Fig. 12, a plurality of the dummy acknowledges can be transmitted in bulk from the BTS 2 to the RNC 4. After transmitting the dummy acknowledge to the RNC 4, the MAC-hs unit 21 of the BTS 2 deletes the registered entry corresponding to the dummy acknowledge from the dummy acknowledge necessity determination table (Step S34).

It is explained that a dummy acknowledge operation is performed only at the time of handover in the present embodiment. However, the present invention is not limited to this configuration. For example, it is possible to configure such that the dummy acknowledge operation is continuously performed and an RLC unit in an RLC discards an unnecessary dummy acknowledge.

Furthermore, the FP data frame contains the dummy acknowledge flag and the BTS specifies the RLC_PDU for which the dummy acknowledge is to be transmitted. However, the FP control frame can notify the BTS of the number of the FP data frame from which transmission of the dummy acknowledge is to be started. In this case, the BTS continues to transmit the dummy acknowledge to the RNC for consecutive FP data frames from an FP data frame of the frame number specified by the BTS until the RNC instructs termination of transmission of the dummy acknowledge.

In this manner, according to the present embodiment, even when the RLC is in the UM mode or the AM mode, an RLC layer (RLC unit) in an RLC acquires from a BTS acknowledge data of a packet obtained by dividing or combining a data packet received from an upper layer and identifies RLC_SDU that could not reach an UE based on the acquired acknowledge data. Then, an RNC retransmits the unreached RLC_SDU to a handover destination BTS. Therefore, handover can be performed promptly even when data is being transmitted. Furthermore, retransmission of RLC_SDU to the handover destination BTS is performed only when there is RLC_PDU of which acknowledge is not confirmed by HARQ in the handover source BTS. Therefore, amount of data to be retransmitted from an RNC to a UE can be reduced and thereby throughput degradation caused by data retransmission can be prevented.

### Second Embodiment.

A second embodiment is described below. In the first embodiment described above, downlink data necessary to be retransmitted at the time of handover is transferred (retransmitted) to a handover destination BTS. In the present embodiment, a data retransmission method is explained in which a UE identifies uplink data necessary to be retransmitted at the time of handover and the UE retransmits the uplink data to a handover destination BTS after the handover is completed. Configurations of the protocol architecture, the protocol stack, and the radio communication system for realizing the data retransmission method according to the present embodiment are the same as those in the first embodiment described above (see Figs. 1, 2, and 3). Furthermore, in the first embodiment, the MAC-hs in the RNC and the UE shown in Fig. 1 and Fig. 2 perform processing as MAC function units for downlink data. However, in the present embodiment, the MAC-hs in the RNC and the UE perform processing as MAC function units for uplink data.

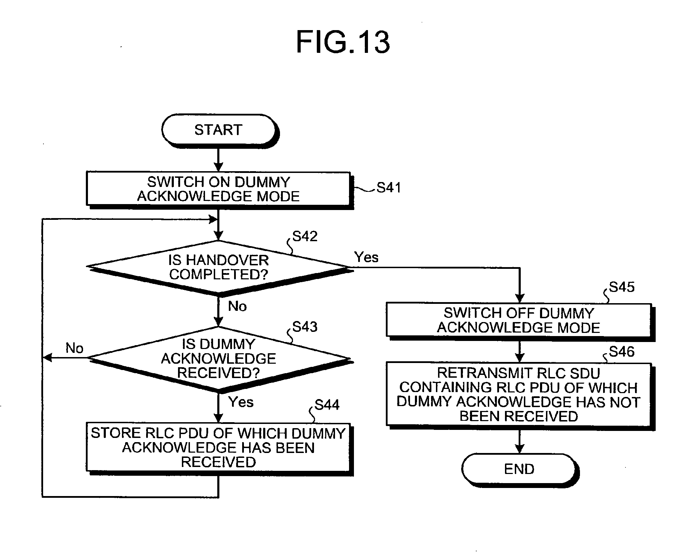

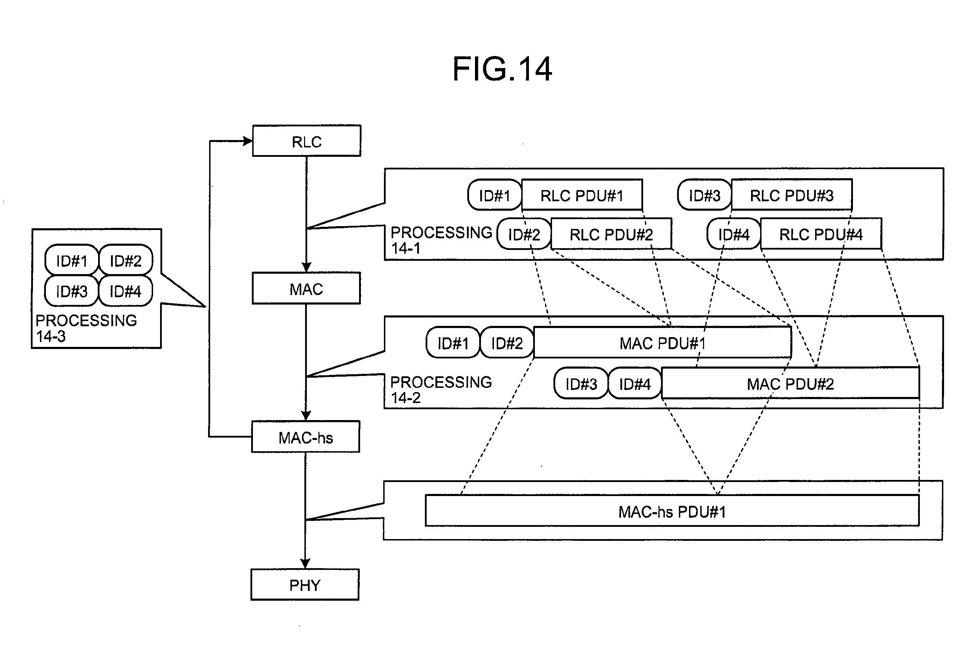

An uplink data (uplink packet data) retransmission operation at the time of handover when the data retransmission method of the present embodiment is applied is described in detail below with reference to Fig. 3, Fig. 13, and Fig. 14. Fig. 13 is a flowchart of an exemplary operation performed by the UE 1 according to the present embodiment. Fig. 14 is a schematic diagram for explaining data exchange between the RLC layer, the MAC layer, and the MAC-hs layer in the UE 1 according to the present embodiment. As described in the first embodiment, the data retransmission method of the present embodiment can also be applied to a configuration in which the BTS 3 that is a handover destination is controlled by the RNC 5 that is a DRNC (see Fig. 4).

When the RNC 4 instructs handover, the UE 1 enters a dummy acknowledge mode (Step S41). While in the dummy acknowledge mode, the RLC unit 11 of the UE 1 stores subsequent RLC_SDUs in a retransmission buffer so that the RLC_SDUs that were transmitted from a cell controlled by the BTS 3 to the BTS 2 but could not reach the BTS 2 can be retransmitted after completion of the handover. When the RLC operates in the AM, a data retransmission buffer used for an ARQ process can be used as the retransmission buffer for the RLC_SDU. The RLC unit 11 transmits an ID for identifying RLC_PDU, of which transmission is confirmed at a time of reception of the dummy acknowledge from the MAC-hs unit 13 as will be described later, in association with RLC_PDU to the MAC unit 12 (see processing 14-1 in Fig. 14). Hereinafter, this ID is referred to as RLC_PDU-ID. In the example shown in Fig. 14, RLC_PDU-ID is distinguished from a sequence number added to an RLC header. However, the RLC_PDU-ID can be a logical ID constituted of an RLC logical channel number and the sequence number of the RLC header.

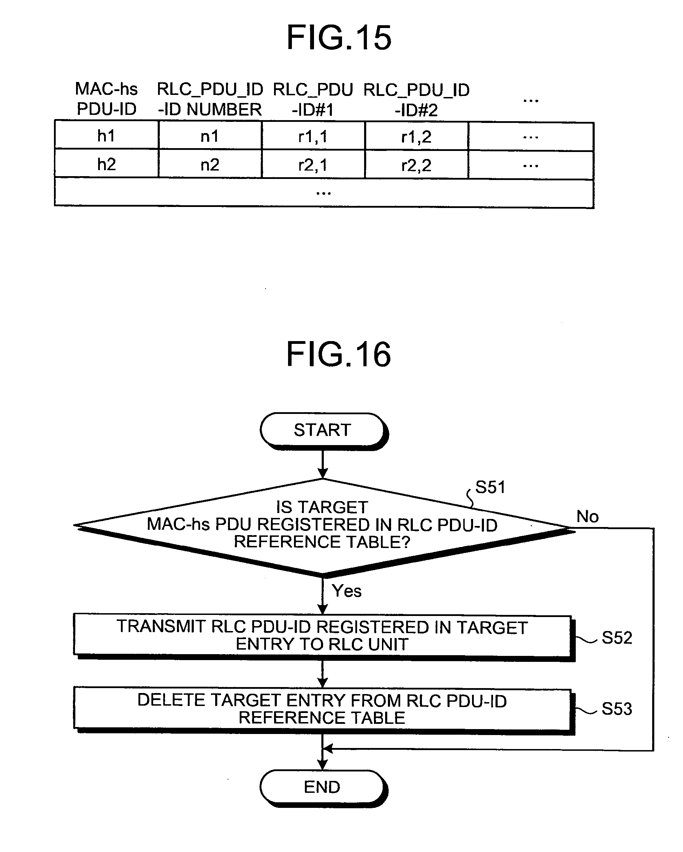

When creating PDU (MAC_PDU) from SDU (MAC_SDU) received from the RLC unit 11, the MAC unit 12 groups IDs received with SDU and transmits grouped IDs in association with created MAC_PDU to the MAC-hs unit 13 (see processing 14-2 in Fig. 14). The MAC-hs unit 13 creates PDU (MAC-hs_SDU) from the SDU (MAC-hs_SDU) received from the MAC unit 12, and transmits the PDU from own HARQ processing block (not shown) to a base station. When doing so, the MAC-hs unit 13 registers RLC_PDU-ID received with the SDU in an RLC_PDU-ID reference table as shown in Fig. 15. In the example shown in Fig. 15, MAC-hs_PDU-ID is an ID for associating an ACK reception notice from the HARQ processing block in the MAC-hs unit 13 with corresponding MAC-hs_PDU, and RLC_PDU-ID number is the number of RLC_PDU-ID registered in a corresponding entry and received by the MAC-hs unit 13.

The UE 1 performs a dummy acknowledge operation by HARQ until handover to the cell controlled by the BTS 3 is completed. Specifically, whether the handover is completed is checked (Step S42), and if the handover is not completed (No at Step S42), whether a dummy acknowledge is received is further checked (Step S43).

At this time, when an HARQ response signal (ACK) is received from the BTS 2, the MAC-hs unit 13 identifies corresponding transmission MAC-hs_PDU based on a timing of reception of the ACK, and executes a processing flow shown in Fig. 16. That is, the MAC-hs unit 13 refers to the RLC_PDU-ID reference table, and checks whether an ID of MAC-hs_PDU identified based on the ACK reception timing is registered in the reference table (Step S51). The process control ends if the ID of the MAC-hs_PDU is not registered in the reference table (No at Step S51). On the other hand, if the ID of the MAC-hs_PDU is registered in the RLC_PDU-ID reference table (Yes at Step S51), RLC_PDU-ID in a registered entry is transmitted as a dummy acknowledge to the RLC unit 11 (Step S52). Incidentally, a plurality of the RLC_PDU-IDs can be transmitted in bulk as shown in processing 14-3 in Fig. 14. After transmitting the dummy acknowledge to the RLC unit 11, the MAC-hs unit 13 deletes the registered entry corresponding to the transmitted dummy acknowledge from the RLC_PDU-ID reference table (Step S53).

Returning to the explanation of Fig. 13, based on a check result obtained at Step S43, if it is determined that the dummy acknowledge is not received (No at Step S43), process control returns to Step S42 and repeats processing. On the other hand, if the dummy acknowledge is received (Yes at Step S43), information indicating that RLC_PDU identified based on RLC_PDU-ID has reached the BTS 2 is stored (Step S44).

Processing at the above-mentioned Steps S42, S43, and S44 are repeated, and when the dummy acknowledges for all RLC_PDUs contained in the RLC_SDU are received, the RLC_SDU stored in the retransmission buffer is deleted. For example, if the RLC_SDU retransmission buffer is configured as shown in Fig. 7, the retransmission buffer control of the first embodiment as described above is applicable.

On the other hand, at the above-mentioned Step S42, if it is determined that the handover is completed (Yes at Step S42), the UE 1 exits the dummy acknowledge mode (Step S45), and retransmits the RLC_SDUs that have remained in the retransmission buffer to a BTS that is a handover destination (Step S46).

In the present embodiment, the RLC unit 11 in the UE manages RLC_PDU of which transmission to the BTS is confirmed by using the table shown in Fig. 7 while the MAC-hs unit 13 manages RLC_PDU-ID to be notified as an acknowledge to the RLC unit 11 by using the table shown in Fig. 15. However, the present invention is not limited to this configuration. For example, it is possible to configure such that the RLC unit 11 manages only the correspondence between RLC_PDU and RLC_PDU-ID so that RLC_SDU to be retransmitted is determined by referring to the RLC_PDU-ID reference table managed by the MAC-hs unit 13. In this configuration, the RLC unit 11 reads (refers to) the RLC_PDU-ID reference table when it is necessary. Therefore, notification of a dummy acknowledge from the MAC-hs unit 13 to the RLC unit 11 as shown in Fig. 14 (processing 14-3) can be omitted.

Furthermore, it is explained that the UE enters the dummy acknowledge mode when the RNC instructs the handover; however, the present invention is not limited to this configuration. For example, the UE can enter the dummy acknowledge mode based on own determination when sending a request of handover to the RNC by notifying measurement data.

Moreover, it is explained that the dummy acknowledge operation is performed only at the time of handover; however, the present invention is not limited to this configuration. For example, it is possible to configure such that the dummy acknowledge is continuously performed and the RLC unit in the UE discards an unnecessary dummy acknowledge.

In this manner, according to the present embodiment, even when the RLC is in the UM mode or the AM mode, the RLC layer (RLC unit) in a UE acquires from a MAC-hs layer (MAC-hs unit) acknowledge data of a packet obtained by dividing or combining a data packet, and identifies RLC_SDU that could not reach a BTS based on the acquired acknowledge data. Then, RLC_SDU that could not reach a handover source BTS due to the handover is retransmitted to a handover destination BTS after completion of the handover. Therefore, handover can be performed promptly even when data is being transmitted. Furthermore, retransmission of RLC_SDU to the handover destination BTS is performed only when there is RLC_PDU of which acknowledge is not confirmed by HARQ in the handover source BTS. Therefore, amount of data to be retransmitted from the UE to the BTS can be reduced and thereby throughput degradation caused by data retransmission can be prevented.

Furthermore, an operation of the first embodiment (downlink data retransmission operation) and an operation of the present embodiment (uplink data retransmission operation) are independent of each other. Therefore, if the present embodiment is applied with the first embodiment, it is possible to minimize data retransmission both for downlink and uplink and fast handover can be realized.

### Third Embodiment.

A third embodiment is described below. The first and the second embodiments described above are configured to effectively perform fast handover using the protocol architecture in which the RLC layer is provided in the RNC while the MAC-hs layer is provided in the BTS. On the other hand, according to the present embodiment, a data retransmission method is explained that is performed when the RLC layer and the MAC-hs layer (an RLC unit and a MAC-hs unit) on the network side are provided in a single device by integration between the RNC and the BTS as proposed in 3.9G EUTRA and EUTRAN currently being examined under 3GPP (3rd Generation Partnership Project).

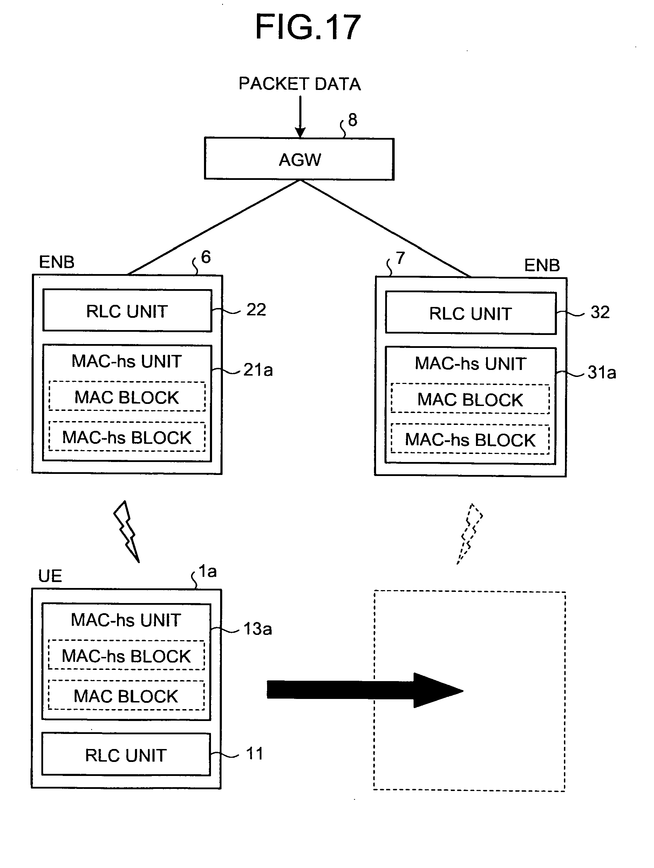

Fig. 17 is a diagram of a configuration example of a radio communication system for realizing the data retransmission method according to the third embodiment. ENBs (Evolved NodeB) 6 and 7 shown in Fig. 17 are devices in which the RNC and the BTS described in the first embodiment are integrated. The ENBs 6 and 7 further include MAC-hs units (MAC-hs units 21a and 31a) and RLC units (RLC units 22 and 32), respectively. The MAC-hs unit in the ENB is one in which the MAC unit (the MAC unit 42) in the RNC and the MAC-hs units (the MAC-hs unit 21 and a MAC-hs unit 31) in the BTS of the first embodiment are integrated, and further includes a MAC block (unit corresponding to the MAC unit 42) and a MAC-hs block (unit corresponding to the MAC-hs units 21 and 31). The RLC units 22 and 32 perform the same operations as that of the RLC unit 41 included in the RNC unit 4 of the first embodiment.

A UE 1a includes a MAC-hs unit 13a and the RLC unit 11. The MAC-hs unit 13a includes a MAC block and a MAC-hs block corresponding to the MAC unit 12 and the MAC-hs unit 13, respectively, included in the UE 1 of the first embodiment. The RLC unit 11 is the same as the RLC unit 11 included in the UE 1 of the first embodiment.

An AGW (Access Gateway) 8 is a gateway device that connects a radio network including the ENB and an upper core network. In the following explanation, the AGW 8 is assumed to be a simple switch that controls data exchange between each of the ENBs.

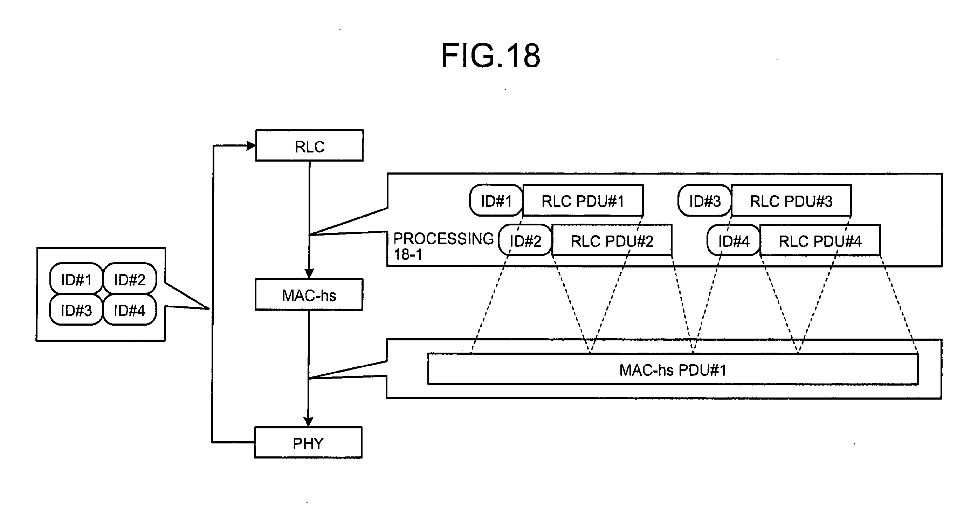

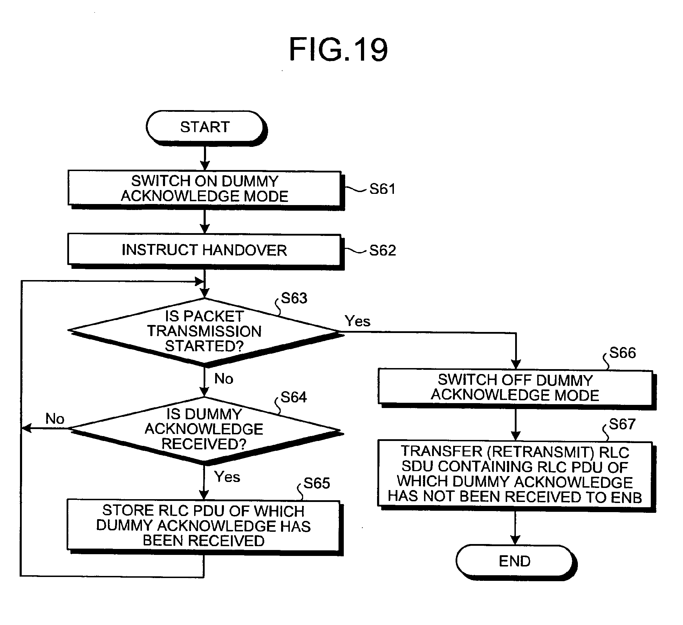

Although the second embodiment described above is to attain effective retransmission of uplink data at the time of handover and to realize fast handover, the RLC unit and the MAC-hs unit are arranged in a single UE, which is substantially the same as that of the present embodiment. As shown in Fig. 18, if multiplexing processing on RLC_PDU in the MAC layer and grouping processing on RLC_PDU-ID are omitted from the processing shown in Fig. 14, the resultant processing is the same as that of the present embodiment. Therefore, in the present embodiment, only a retransmission method on downlink data at the time of handover is explained. Furthermore, an operation performed when the UE 1 performs handover from a cell controlled by the ENB 6 to a cell controlled by the ENB 7 is described with reference to Fig. 19. Fig. 18 is a schematic diagram for explaining a data exchange between an RLC layer and a MAC-hs layer in the ENB according to the present embodiment. Fig. 19 is a flowchart of downlink data retransmission processing performed by the ENB according to the present embodiment.

Upon determining to handover the UE 1 from the cell controlled by the ENB 6 to the cell controlled by the ENB 7, the ENB 6 enters a dummy acknowledge mode (Step S61). That is, the RLC unit 22 and the MAC-hs unit 21a are switched to the dummy acknowledge mode. While in the dummy acknowledge mode, the RLC unit 22 stores subsequent RLC_SDUs in a retransmission buffer so that the subsequent RLC_SDUs can be transmitted to the ENB 7 after completion of the handover. When the RLC operates in the AM, if a data retransmission buffer used for an ARQ process is used as the retransmission buffer for storing therein the RLC_SDU, an additional retransmission buffer is not needed. Similar to the second embodiment described above, the RLC unit 22 transmits RLC_PDU-ID, which is for identifying RLC_PDU of which transmission is confirmed when the MAC processing block receives a dummy acknowledge from the MAC-hs processing block in the MAC-hs unit 21a, in association with RLC_PDU to the MAC-hs unit 21a (the MAC processing block) (see processing 18-1 in Fig. 18). In the example shown in Fig. 18, RLC_PDU-ID is distinguished from a sequence number added to an RLC header. However, the RLC_PDU-ID can be a logical ID constituted of an RLC logical channel number and the sequence number of the RLC header.

In the MAC-hs unit 21a, the MAC-hs block creates PDU (MAC-hs_PDU) from SDU (MAC-hs_SDU) received from the MAC block, and transmits the PDU by an HARQ processing block (not shown) in the MAC-hs unit 21a. In doing so, the MAC-hs block registers the RLC_PDU-ID received with the SDU in, for example, the RLC_PDU-ID reference table shown in Fig. 15, in the same manner as in the second embodiment.

After switching to the dummy acknowledge mode, the ENB 6 instructs the ENB 7 being a handover destination and the UE 1a to start handover. With this, the handover processing begins (Step S62). Then, the ENB 6 continuously performs the dummy acknowledge operation by HARQ until a data transmission destination is switched to the ENB 7. Specifically, the ENB 6 monitors whether the transmission destination has been switched and packet transmission is started (whether the transmission destination has been switched) (Step S63). If the transmission destination has not been switched completely (No at Step S63), the MAC block monitors whether a dummy acknowledge is received from the MAC-hs block (Step S64). If no dummy acknowledge is received (No at Step S64), process control returns to Step S63 and repeats processing. On the other hand, when the dummy acknowledge is received (Yes at Step S64), information indicating that the RLC_PDU contained in the MAC_PDU of which dummy acknowledge is received has reached the UE 1a is stored (Step S65).

The above-mentioned Steps S63, S64, and S65 are repeated, and when dummy acknowledges for all RLC_PDUs contained in the RLC_SDU are confirmed (when dummy acknowledges for all RLC_PDUs contained in the RLC_SDU are received), the RLC_SDU is deleted from the retransmission buffer. For example, if the RLC_SDU retransmission buffer is configured as shown in Fig. 7, a flag is set in a field corresponding to the RLC_SDU of which dummy transmission to the UE 1 is tentatively confirmed by the dummy acknowledge, and when flags are set in all acknowledge fields, all pieces of data in a target entry containing the RLC_SDU is cleared.

Furthermore, at the above-mentioned Step S63, when it is determined that the packet transmission destination is switched (Yes at Step S63), the ENB 6 exits the dummy acknowledge mode (Step S66), and transfers the RLC_SDU that remained in the retransmission buffer to the ENB 7 that is a handover destination of the UE 1 (Step S67).

In this manner, according to the present embodiment, even when the RLC is in the UM mode or the AM mode, an RLC layer (RLC unit) in a handover source ENB acquires acknowledge data of a packet obtained by dividing or combining a data packet received from an upper layer and identifies RLC_SDU that could not reach an UE based on the acquired acknowledge data. Then, the handover source ENB retransmits the unreached RLC_SDU to a handover destination ENB. Therefore, handover can be performed promptly even when data is being transmitted. Furthermore, retransmission of RLC_SDU to the handover destination ENB is performed only when there is RLC_PDU of which acknowledge is not confirmed by HARQ in the handover source ENB. Therefore, amount of data to be retransmitted from the ENB to the UE can be reduced and thereby throughput degradation caused by data retransmission can be prevented. Moreover, if the data retransmission processing of the present embodiment is applied to handover on uplink data being transmitted, it is possible to minimize data retransmission both for downlink and uplink and fast handover can be realized.

Furthermore, as described in the first embodiment, it is possible to configure such that the ENB continuously performs the dummy acknowledge operation while the RLC unit in the ENB discards an unnecessary dummy acknowledge. Moreover, as described in the second embodiment, the RLC unit can manage only correspondence between RLC_PDU and RLC_PDU-ID so that RLC_SDU to be retransmitted is determined by referring to the RLC_PDU-ID reference table managed by the MAC-hs unit.

### INDUSTRIAL APPLICABILITY

As described above, the data retransmission method according the present invention is advantageous for a radio communication, and particularly advantageous as the data retransmission method for retransmitting unreached data to a destination device in a radio communication system that performs retransmission control by ARQ and when a destination device for data performs handover while there is data that has not reached the destination device.

## Claims

1. A data retransmission method implemented in a radio communication system including a base station and a network controller that transmits a data packet received from a network to a destination mobile station via the base station, wherein the network controller retransmits a data packet received from the network to a destination mobile station of the data packet depending on needs, the data retransmission method comprising:
a packet transmission step including the network controller creating a single packet or a plurality of packets in a desired size from the data packet, and the network controller transmitting created packet to a base station that controls a destination mobile station;
a reception result notification step including the base station transmitting a received packet to a destination mobile station and notifying the network controller of a packet reception result obtained from the destination mobile station;
a data packet transmission result determination step including the network controller determining, based on a notified reception result, whether a data packet corresponding to a packet transmitted to the base station has correctly reached a destination mobile station; and
a data retransmission step including, upon execution of handover by the destination mobile station, the network controller retransmitting a data packet, the data packet being determined that it has not correctly reached the destination mobile station, via a based station being a handover destination.

2. A data retransmission method including a mobile station retransmitting, depending on needs, a data packet that has been transmitted via a base station that controls the mobile station, the base station being one of base stations constituting a radio communication system, the data retransmission method comprising:
a packet transmission step of creating a single packet or a plurality of packets in a desired size from a data packet and transmitting created packet to a base station that controls the mobile station;
a data packet transmission result determination step of determining whether the data packet has correctly reached a base station that controls the mobile station based on a packet reception result obtained from the base station; and
a data packet retransmission step of retransmitting, upon execution of handover by the mobile station, a data packet, the data packet being determined that it has not correctly reached a base station that controls the mobile station, to a base station being a handover destination.

3. A data retransmission method implemented in a radio communication system including a base station that transmits a data packet received from a network to a destination mobile station controlled by the base station, wherein the base station retransmits a data packet received from the network to a destination mobile station of the data packet depending on needs, the data retransmission method comprising:
a packet transmission step of creating a single packet or a plurality of packets in a desired size from the data packet and transmitting created packet to a destination mobile station controlled by the base station;
a data packet transmission result determination step of determining whether the data packet has correctly reached a destination mobile station based on a packet reception result obtained from the destination mobile station; and
a data packet retransmission step of retransmitting, upon execution of handover by the destination mobile station, a data packet, the data packet being determined that it has not correctly reached the destination mobile station, to a destination mobile station via a base station being a handover destination.

4. A network controller that constitutes a radio communication system with a base station, creates a single packet or a plurality of packets in a desired size from a data packet received from a network, transmits created packet to a destination mobile station of the packet via the base station, and receives a packet reception result from the destination mobile station via the base station, the network controller comprising:
a data packet transmission result determining unit that determines whether a data packet corresponding to a packet transmitted to the base station has correctly reached a destination mobile station based on a reception result obtained via the base station; and
a data packet retransmitting unit that retransmits, upon execution of handover by the destination mobile station, a data packet, the data packet being determined by the data packet transmission result determining unit that it has not correctly reached the destination mobile station, via a base station being a handover destination.

5. A mobile station that is controlled by one of base stations constituting a radio communication system, creates a single packet or a plurality of packets in a desired size from a data packet, and transmits created packet to a base station that controls the mobile station, the mobile station comprising:
a data packet transmission result determining unit that determines whether the data packet has correctly reached the base station based on a packet reception result obtained from the base station that controls the mobile station; and
a data packet retransmitting unit that retransmits, upon execution of handover by the mobile station, a data packet, the data packet being determined by the data packet transmission result determining unit that it has not correctly reached the base station that controls the mobile station, to a base station being a handover destination.

6. A base station that creates a single packet or a plurality of packets in a desired size from a data packet received from a network and transmits created packet to a destination mobile station that is controlled by the base station, the base station comprising:
a data packet transmission result determining unit that determines whether the data packet has correctly reached the destination mobile station based on a packet reception result obtained from the destination mobile station; and
a data packet retransmitting unit that retransmits, upon execution of handover by the destination mobile station, a data packet, the data packet being determined by the data packet transmission result determining unit that it has not reached the destination mobile station, to a destination mobile station via a base station being a handover destination.
